(19) Europäisches Patentamt
European Patent Office
Office européen des brevets

(11) **EP 1 341 866 B1**

(12) **EUROPÄISCHE PATENTSCHRIFT**

(45) Veröffentlichungstag und Bekanntmachung des Hinweises auf die Patenterteilung:
**01.02.2006 Patentblatt 2006/05**

(21) Anmeldenummer: **01989539.0**

(22) Anmeldetag: **29.11.2001**

(51) Int Cl.:
**C09K 3/14** *(2006.01)*    **B24D 3/00** *(2006.01)*
**C04B 35/10** *(2006.01)*

(86) Internationale Anmeldenummer:
**PCT/EP2001/013972**

(87) Internationale Veröffentlichungsnummer:
**WO 2002/046326 (13.06.2002 Gazette 2002/24)**

(54) **SCHLEIFKORN AUF BASIS VON AL2O3 UND ZRO2, VERFAHREN ZU SEINER HERSTELLUNG SOWIE SEINE VERWENDUNG**

AL2O3 AND ZRO2 BASED ABRASIVE GRAIN, METHOD FOR THE PRODUCTION AND USE THEREOF

GRAIN ABRASIF A BASE DE AL 2?O 3? ET DE ZRO 2?, SON PROCEDE DE PRODUCTION ET SON UTILISATION

(84) Benannte Vertragsstaaten:
**AT DE FR GB IT**

(30) Priorität: **08.12.2000 DE 10061500**

(43) Veröffentlichungstag der Anmeldung:
**10.09.2003 Patentblatt 2003/37**

(73) Patentinhaber: **Treibacher Schleifmittel GmbH 79725 Laufenburg (DE)**

(72) Erfinder:
• **DAZZA, Alessandro A-9500 Villach (AT)**
• **ZEIRINGER, Hans A-8321 Kappel (AT)**
• **BUCAR, Wolfgang 79725 Laufenburg (DE)**
• **MÖLTGEN, Paul 79725 Laufenburg (DE)**

(74) Vertreter: **Westphal, Klaus et al Patentanwälte Westphal, Mussgnug & Partner Am Riettor 5 78048 Villingen-Schwenningen (DE)**

(56) Entgegenhaltungen:
EP-A- 0 595 081    FR-A- 2 469 440
US-A- 5 143 522

**Beschreibung**

Die vorliegende Erfindung betrifft ein Schleifkorn auf Basis von $Al_2O_3$ und $ZrO_2$ gemäß Anspruch 1, ein Verfahren zu dessen Herstellung gemäß Anspruch 4, sowie dessen Verwendung gemäß Anspruch 12.

Schleifkörner auf Basis von $Al_2O_3$ und $ZrO_2$, die durch extrem schnelles Abkühlen einer Schmelze aus $Al_2O_3$ und $ZrO_2$ hergestellt werden, sind schon seit ca. 40 Jahren bekannt. Bei ausgewählten Schleifprozessen zeichnen sie sich durch besonders vorteilhafte Schleifeigenschaften aus.

So wird zum Beispiel in der US-A-3 981 408 ein Zirkonkorund-Schleifkorn beschrieben, das durch das Eingießen einer unter reduzierenden Bedingungen hergestellten Schmelze aus $Al_2O_3$ und $ZrO_2$ zwischen Metallplatten extrem schnell abgekühlt wird, wodurch eine Entmischung der Komponenten verhindert wird und ein außerordentlich feines Kristallitgefüge und gleichzeitig ein gewisser Anteil an tetragonaler Hochtemperaturmodifikation des $ZrO_2$ stabilisiert werden kann. Aufgrund des mikrokristallinen Gefüges eignen sich die so hergestellten Zirkonkorunde besonders gut für den Einsatz in Schleifmitteln, da sie einerseits eine hohe Zähigkeit und damit eine große Festigkeit aufweisen, gleichzeitig aber auch bei entsprechend hoher Belastung im Schleifprozess dazu neigen, neue Schneidkanten dadurch auszubilden, dass - begünstigt und ermöglicht durch das mikrokristalline Gefüge - kleinere Bereiche aus dem Schleifkorn herausbrechen. Diese neuen Schneidkanten greifen dann wieder in den Schleifprozess ein, wodurch ein kühler und damit Werkstoff-schonender Schliff sowie hohe Abtragsleistungen erreicht werden. Der Gehalt an $SiO_2$ soll nach der US-A-3 891 408 so niedrig wie möglich sein. $TiO_2$ wird als weniger schädlich angesehen.

Durch Dotierungen und Variationen des Abschreckverfahrens und des Reduktionsgrades der Schmelze wurde in der Vergangenheit immer wieder versucht, die Leistungsstärke der Zirkonkorundschleifkörner weiter zu verbessern.

So wird in der DE-A-3 040 992 ein Zirkonkorund beschrieben mit einem Anteil von 27 bis 35 Gew.-% $ZrO_2$, der weiterhin, ausgedrückt als $TiO_2$, 1 bis 10 Gew.-% an Oxycarbiden, Carbiden und/oder Suboxiden des Titans enthält, die durch Reduktion von $TiO_2$ mit Kohle während des Schmelzprozesses erhalten werden. Die Schleifleistung dieses Schleifkorns wird als gleich oder besser im Vergleich zu der des in der US 3,891,408 beschriebenen Schleifkorns charakterisiert. Der Vorteil dieses Schleifkorns wird aber vor allem in der Senkung der Herstellkosten bei vergleichbarer Schleifleistung gesehen, die durch Reduzierung des $ZrO_2$-Anteils erreicht wird. In der DE-A-3 040 992 wird die Vermutung zum Ausdruck gebracht, dass eine direkte Beeinflussung des Schleifprozesses durch die bei der Reduktion entstandenen Ti-Verbindungen verantwortlich für die Verbesserung der Eigenschaften des Schleifkorns ist.

In der US-A-5 143 522 wird ein Schleifkorn beschrieben mit einem Anteil von 20 bis 50 Gew.-% $ZrO_2$, wovon mehr als 25 Gew.-% in der tetragonalen Form vorliegen, 1 bis 10 Gew.-% an reduziertem Titanoxid in der Form von Suboxiden, Carbiden und Oxycarbiden, 0.03 bis 0.5 Gew.-% Kohlenstoff, weniger als 3 Gew.-% Verunreinigungen und $Al_2O_3$ als Hauptbestandteil. Die Struktur des Schleifkorns wird als Einlagerungen von $Al_2O_3$-Primärkristallen in eine eutektische Aluminiumoxid-Zirkonoxid-Matrix beschrieben. Die Größe der Primärkristalle liegt zwischen 5 und 50 µm. Der Anteil an $ZrO_2$ in der tetragonalen Kristallform beträgt bis zu 75 Gew.-%, bezogen auf den Gesamtgehalt an $ZrO_2$. Als schädliche Verunreinigungen werden vor allem $Na_2O$, dessen Gehalt nicht über 0.1 Gew.-% liegen sollte, und $SiO_2$, dessen Gehalt nicht über 1 Gew.-%, im Idealfall unter 0.1 Gew.-%, liegen sollte, angesehen. Als weitere Rohstoff-bedingte Verunreinigungen werden MgO, CaO und $Fe_2O_3$ genannt, deren Gehalt nicht über 1.5 Gew.-% liegen sollte.

Im Gegensatz zu der oben genannten Schrift und der US-A-3 891 408 sowie der allgemeinen Meinung der Fachleute wird in der GB-A-2 011 880 ein Zirkonkorund auf Basis von Bauxit und Baddeleyit mit Anteilen an $TiO_2$ bis zu 2.5 Gew.-% beschrieben, der zwischen 1.1 und 2.0 Gew.-% $SiO_2$ enthält und dem für bestimmte Anwendungen Vorteile gegenüber den Materialien aus reineren Rohstoffen zugesprochen werden. Der wesentliche Unterschied zu allen anderen hier beschriebenen Verfahren ist, dass preiswerter Bauxit direkt als Rohstoff eingesetzt wird. Beim Einsatz von Bauxit als Rohstoff für Zirkonkorund müssen jedoch große Mengen an Verunreinigungen (Bauxit enthält vor allem stets größere Mengen an Eisenmineralien, daneben auch Titanverbindungen und Quarz bzw. Silikate) reduziert werden. Im Gegensatz zur DE-A-3 040 992, zur US-A-5 143 522 und auch der später noch erwähnten EP-B-0 595 081 wird gemäß der GB-A-2 011 880 die Kohle für die Reduktion der Verunreinigungen verbraucht, wobei vermutlich eine Legierung aus metallischem Eisen und Silizium entsteht. Der hohe Anteil von über 1 % $SiO_2$ in den beschriebenen Produkten deutet darauf hin, dass mit relativ wenig Kohle als Reduktionsmittel gearbeitet wurde, so dass ein wesentlicher Unterschied zu den oben genannten Schriften allein schon darin besteht, dass Titan im Produkt vermutlich nicht in den reduzierten Formen vorliegt, die für die Stabilisierung der tetragonalen $ZrO_2$-Modifikation verantwortlich sind und schleifaktive Eigenschaften haben.

In der US-A-4 457 767 wird ein Zirkonkorund-Schleifkorn beschrieben, das zwischen 0.1 und 2 % Yttriumoxid enthält, das zur Stabilisierung der tetragonalen Hochtemperaturmodifikation dient. Im Gegensatz zur Stabilisierung mit $TiO_2$ haben eigene Untersuchungen gezeigt, dass die Viskosität der Schmelze durch den Zusatz von $Y_2O_3$ nur wenig oder gar nicht beeinflusst wird. Im Vergleich zu den Schmelzen, bei denen $TiO_2$ als Stabilisator für die tetragonale $ZrO_2$-Modifikation eingesetzt wird, bringt das den Vorteil, dass ein schnelles Abschrecken der Schmelze und die Realisierung eines extrem feinen Gefüges ohne Behinderung möglich ist. Dieser Nachteil für die Ti-haltigen Zirkonkorunde wird jedoch durch die schleifaktive Wirkung der reduzierten Ti-Verbindungen wieder ausgeglichen.

Das japanische Patent JP-A-1 614 974 beschreibt einen Titanhaltigen Zirkonkorund, der ebenfalls $Y_2O_3$ enthält, mit dem die Hochtemperaturmodifikation des $ZrO_2$ stabilisiert wird.

In der EP-B-0 595 081, von der die Erfindung ausgeht, wird ein Schleifkorn beschrieben mit einem Gehalt an Titanverbindungen in Form von Suboxiden, Carbiden und/oder Oxycarbiden, bei dem mehr als 90 Gew.-% des $ZrO_2$ in der tetragonalen Modifikation vorliegen und das dadurch erhalten wird, dass die Schmelze in weniger als 10 Sekunden bis zur vollständigen Erstarrung abgeschreckt wird. Die Stabilisierung der tetragonalen Hochtemperaturmodifikation des $ZrO_2$ wird in diesem Fall ohne Zusatz von $Y_2O_3$ allein durch die Stabilisierung mit Hilfe der reduzierten Titanverbindungen und das schnelle Abschrecken erreicht.

Verfahren zum schnellen Abschrecken von Oxidschmelzen werden beispielsweise in der US-A-3 993 119, der US-A-4 711 750 und der EP-B-0 593 977 beschrieben.

Sämtliche oben beschriebenen Verfahren und Stoffe hatten das Ziel, der Forderung der Anwender nach einem Schleifkorn mit noch höheren Abtragsleistungen und günstigeren Schleifverhalten, insbesondere für die Bearbeitung verschiedenster Stahlsorten, nachzukommen. Zwar haben sich die genannten Verfahren und Stoffe in der Vergangenheit bewährt, können aber die weiter gestiegenen Anforderungen der Hersteller von Schleifmitteln bzw. deren Kunden nach weiteren Leistungssteigerungen und einem noch effizienteren Einsatz der Schleifmittel nicht erfüllen.

Aufgabe der Erfindung ist es daher, ein Zirkonkorund-Schleifkorn bereitzustellen, das bei der Bearbeitung einer breiten Palette von Werkstoffen, insbesondere bei verschiedensten Stahlsorten, leistungsmäßig eine Verbesserung gegenüber dem Stand der Technik darstellt.

Gelöst wird die Aufgabe durch die Bereitstellung eines Schleifkorns mit den Merkmalen des Anspruchs 1

Das Schleifkorn zeichnet sich dadurch aus, dass mit Schleifmitteln, die mit diesem Schleifkorn hergestellt werden, bei der Bearbeitung einer breiten Palette von Werkstoffen, insbesondere bei den unterschiedlichsten Stahlsorten, im Vergleich mit den bisher bekannten Schleifmitteln auf Basis von Zirkonkorund unter Beibehaltung vergleichbarer bzw. gleicher Versuchsparameter Steigerungen der Abtragsleistungen bis zu 50 % und mehr erreicht werden.

Bei bevorzugten Ausführungsformen des erfindungsgemäßen Schleifkorns in den Ansprüchen 2 und 3 aufgezeigt

Überraschenderweise wurde gefunden, dass bei der Herstellung eines Schleifkorns auf Basis von $Al_2O_3$ und $ZrO_2$ in Analogie zur EP-B-0 595 081 durch den gezielten Zusatz von $SiO_2$-haltigen Verbindungen während des Schmelzprozesses ein Schleifkorn gewonnen werden kann, das den bisher bekannten Zirkonkorunden deutlich überlegen ist.

Dies war um so überraschender, da bei der Herstellung Schleifkörnern auf Basis von Korund üblicherweise Verunreinigungen mit $SiO_2$ vermieden werden, weil die in der Schmelze entstehenden Silikate keine hervorragenden Schleifeigenschaften haben und somit die Leistungsstärke des Schleifkorns herabsetzen. Auch bei der Herstellung von Zirkonkorund-Schleifkörnern ging der allgemeine Trend in Fachkreisen dahin, aus Qualitätsgründen möglichst reine Rohstoffe einzusetzen und den Anteil an Verunreinigungen so gering wie möglich zu halten. Lediglich aus Kostengründen oder aus Gründen der Verfügbarkeit hat man auch auf stärker verunreinigte Rohstoffe zurückgegriffen. Die auf dem Markt erhältlichen Zirkonkorund-Schleifkörner selber sind daher relativ reine Produkte, in der Regel enthalten sie allerdings zwischen 0.02 und 0.3 Gew.-% $SiO_2$, wobei jedoch eine Abhängigkeit der Leistungsstärke vom $SiO_2$-Gehalt aus den entsprechenden zugrundeliegenden Schriften nicht erkennbar ist, sondern - wie schon eingangs erwähnt - eher als schädlich angesehen wird. Bei den meisten handelsüblichen Produkten liegt der Gehalt bei ca. 0.2 Gew.-%. Lediglich das von der Anmelderin nach der EPB-0 595 081 hergestellte Produkt weist einen deutlich geringeren Anteil an $SiO_2$ auf, der bei ca. 0,02 Gew.-% liegt. Ein Zusammenhang zwischen dem $SiO_2$-Anteil und der Leistungsfähigkeit des Schleifkorns wird in der EP-B 0 595 081 nicht aufgezeigt.

Bei der Herstellung des Schleifkorns wird beispielsweise eine Mischung aus 50 bis 80 Gew.-% $Al_2O_3$, vorzugsweise Tonerde, und 20 bis 50 Gew.-% $ZrO_2$ in Form von Baddeleyit, ZirkonKonzentrat und/oder Zirkonsand in Gegenwart von 0.5 - 10 Gew.-% $TiO_2$, das vorzugsweise in Form von Rutil eingesetzt wird, und 0.5 bis 5 Gew.-% $SiO_2$, das vorzugsweise in Form von Zirkonsand der Mischung zugegeben wird, unter reduzierenden Bedingungen in Gegenwart von 0.5 bis 5 Gew.-% Kohle im elektrischen Lichtbogenofen geschmolzen. Die geschmolzene Mischung wird dann möglichst rasch abgeschreckt, was beispielsweise dadurch erreicht werden kann, dass die Schmelze entsprechend der EP- B-0 593 977 in einen schmalen Spalt zwischen Metallplatten eingegossen wird, wobei das flüssige Material innerhalb weniger Sekunden, bevorzugt in weniger als 5 Sekunden, besonders bevorzugt in weniger als 3 Sekunden, vollständig erstarrt. Der Spalt zwischen den Metallplatten, der durch entsprechende Aussparungen an Metallplatten, die zu einem Plattenpaket zusammengestellt sind, gebildet wird, weist eine Breite von 1 bis 10 mm, bevorzugt 2 bis 5 mm, auf. Das Kühlplattenpaket, das beim Abgießen der Schmelze mit einer definierten Geschwindigkeit unter der Gießschnauze des Ofengefäßes hergeführt und mit der flüssigen Schmelze gefüllt wird, besitzt eine Ausgangstemperatur von ca. 100 bis 500 °C. Nach dem Abguß hat sich durch das Füllen der Spalten mit ca. 2000 °C heißer Schmelze die Temperatur des Kühlplattenpaketes um ca. 50 - 100 °C erhöht, so dass das Kühlplattenpaket nach dem Entleeren in eine sogenannte Kühlzone gefahren und durch Besprühen mit Wasser wieder auf die festgelegte Ausgangstemperatur gebracht wird. Das Kühlplattenpaket wird dann in die Ausgangsstellung für den nächsten Gießvorgang gebracht, der gestartet werden kann, sobald wieder genügend Schmelze im Ofengefäß vorhanden ist.

Neben dem oben geschilderten Verfahren zum Abschrecken der flüssigen Schmelze, das dem in der EP-B-0 593 977 beschriebenen Verfahren entspricht, kann jedoch auch jede andere geeignete Methode nach dem Stand der Technik zum schnellen Abschrecken flüssiger Oxidschmelzen, zum Beispiel die in den US-Patenten US-A-3 993 119 und US-A-4 711 750 beschriebenen Verfahren, eingesetzt werden.

Bevorzugt werden für die Herstellung des erfindungsgemäßen Schleifkorns als Rohstoffe Tonerde, Zirkonkonzentrat, Zirkonsand und Rutil eingesetzt, wobei die Rohstoffmischung so gewählt wird, dass im Endprodukt überwiegend ein eutektisches Gemisch von $ZrO_2$ und $Al_2O_3$ vorliegt, mit einem $Al_2O_3$-Gehalt von ca. 55 - 65 Gew.-%, einem $ZrO_2$-Anteil von ca. 35 - 45 Gew.-%, jeweils bezogen auf den Gesamtanteil an $Al_2O_3$ und $ZrO_2$.

Der Kohlenstoffgehalt im Produkt liegt zwischen 0.03 und 0.5 Gew.%, während in der Ausgangsmischung zwischen 0.5 und 5 Gew.-%, bevorzugt 1 bis 4 Gew.-%, eingesetzt werden. Das bedeutet, dass ein großer Teil der Kohle beim Schmelzvorgang zur Stabilisierung der reduzierenden Bedingungen in der Schmelze, zur Reduzierung des $TiO_2$ und zur Reduzierung des $SiO_2$ verbraucht wird und dabei zu einem großen Teil in Form von CO entweicht. Der relativ geringe $SiO_2$-Anteil im Produkt bei vergleichsweise großen Mengen in der Ausgangsmischung deutet darauf hin, dass $SiO_2$ zu einem großen Teil bei dem Schmelzvorgang unter den gewählten reduzierenden Bedingungen zu SiO reduziert und verdampft wird und lediglich ein geringer Anteil zu Siliziden und/oder anderen Si-Verbindungen reduziert wird. Eine Reduktion zum metallischen Si, das sich dann zusammen mit anderen metallischen Verunreinigungen, die durch Reduktion aus den entsprechenden Oxide, die im Rohstoff als Verunreinigungen entstanden sind, sich im Sumpf des Ofens ablagern sollte, ist gering.

Wie in der EP-B-0 595 081 bewirken die Ti-Verbindungen, möglicherweise bei der Reduktion entstandene Suboxide oder andere Reduktionsprodukte des Titans, eine Stabilisierung der tetragonalen Hochtemperatur-Modifikation des $ZrO_2$, so dass in Kombination mit dem oben beschriebenen effektiven Abschrecken der Schmelze im Produkt sehr hohe Anteile an tetragonaler $ZrO_2$-Modifikation erhalten werden.

Jedoch fällt beim Vergleich mit Materialien, die bis auf den Anteil an $SiO_2$ in der Schmelze und im Endprodukt identisch mit dem erfindungsgemäßen Schleifkorn sind und auch nach dem gleichen Verfahren geschmolzen und abgeschreckt wurden, auf, dass sich beim Einsatz von $TiO_2$ zur Stabilisierung des tetragonalen $ZrO_2$ der Zusatz von $SiO_2$ offensichtlich kontraproduktiv zur Stabilisierung der tetragonalen $ZrO_2$-Modifikation verhält und das erfindungsgemäße Produkt bei ansonsten gleicher Ausgangsmischung einen niedrigeren Anteil an tetragonaler $ZrO_2$-Modifikation aufweist als ein vergleichbares Schleifkorn mit einem geringeren $SiO_2$-Anteil. Die EP-B-0 595 081 lehrt nun, dass die besten Schleifresultate mit Schleifkörnern erzielt werden, die einen Anteil an tetragonaler $ZrO_2$-Modifikation von mindestens 90 Gew.-% , bezogen auf den Gesamtanteil an $ZrO_2$, aufweisen. Um so überraschender war es, dass mit den erfindungsgemäßen Schleifkörnern trotz eines vergleichsweise verringerten Anteils an tetragonaler $ZrO_2$-Modifikation für sämtliche getesteten Einsatzgebiete deutlich bessere Schleifresultate erzielt werden konnten als mit den entsprechenden Schleifkörnern gemäß dem Stand der Technik, die höhere Anteile an tetragonaler ZrO2-Modifikation aufwiesen. Grundsätzlich gilt jedoch auch für das erfindungsgemäße Schleifkorn, dass ein hoher Anteil an tetragonaler Phase schleiftechnische Vorteile bringt. So kann der Anteil an tetragonaler Phase durch erhöhten Zusatz an $TiO_2$ wieder heraufgesetzt werden, was darauf hindeutet, dass zunächst möglicherweise zumindest ein Teil des $SiO_2$ in der Schmelze mit $TiO_2$ z. B. zu Ti-Siliziden reagiert und damit den Anteil an der oder den reduzierten Ti-Verbindungen, die für die Stabilisierung der tetragonalen $ZrO_2$-Modifikation verantwortlich sind, herabsetzt. Durch die Erhöhung des Anteils an $TiO_2$ kann dann dieser Anteil wieder heraufgesetzt werden. Dabei gelingt es überraschenderweise, die Anteile an tetragonaler $ZrO_2$-Phase wieder zu erhöhen, ohne dass dabei auch die Viskosität der Schmelze wieder so stark heraufgesetzt wird, dass sich das Abschreckverhalten der Schmelze wieder verschlechtert.

Eine Erklärung für dieses Verhalten ist möglicherweise in den physikalischen Eigenschaften der Schmelze selbst zu suchen, die durch das Vorhandensein von $SiO_2$ verändert wird. So ist zu erkennen, dass die Viskosität der Schmelze, die durch das Entstehen der schwerlöslichen und hochschmelzenden Titanverbindungen im Verlauf des unter reduzierenden Bedingungen ablaufenden Schmelzvorgangs mit zunehmendem Gehalt an Titanoxid zunimmt, durch die Zugabe von $SiO_2$ wieder herabgesetzt wird, wodurch z. B. das Abgießen der Schmelze in einen relativ schmalen Spalt zwischen Metallplatten erleichtert wird. Je schneller die flüssige Schmelze zwischen die Kühlplatten eingegossen werden kann, um so schneller geht auch die Abschrekkung der Schmelze vonstatten und um so feiner ist auch das Gefüge, das in dem Produkt stabilisiert werden kann.

Gefügeuntersuchungen, die an den erfindungsgemäßen Schleifkörnern gemäß den Beispielen 8 und 9 und den Vergleichsbeispielen 1 und 2 sowie den Beispielen 1 bis 7 und 10 gemacht wurden, sprechen für die Theorie, dass neben einem hohen Anteil an tetragonaler $ZrO_2$-Phase und der Anwesenheit von Titanverbindungen in Form von Oxiden und/oder Suboxiden und/oder Carbiden und/oder Oxycarbiden und/oder Oxycarbonitriden und/oder Siliziden vor allem auch das Gefüge des Schleifkorns für die Leistungsstärke verantwortlich ist. Je feiner das Gefüge ist, um so leistungsstärker ist das entsprechende Schleifkorn. Die Gefügeuntersuchungen wurden anhand von Rückstreuaufnahmen mit dem Rasterelektronenmikroskop und anhand von polierten Schliffen durchgeführt. Dabei stellte sich heraus, dass bei den optimal abgekühlten Materialien selbst bei 10.000-facher Vergrößerung das eutektische Gemisch aus $Al_2O_3$ und $ZrO_2$ derart fein strukturiert ist, dass die Größe der Einzelausscheidungen, die unter 0,1 $\mu$m liegt, über Rückstreuelek-

tronenbilder im Rasterelektronenmikroskop nicht mehr genau erfasst werden kann. Was jedoch bei allen untersuchten Proben deutlich zu erkennen ist, sind einzelne dendritische eutektische Bereiche, die eine domänenartige Struktur ausbilden, wobei der Querschnitt der dendritischen eutektischen Domänen mit abnehmender der Größe der Einzelausscheidungen von $Al_2O_3$ und $ZrO_2$ ebenfalls abnimmt. Die dendritischen eutektischen Domänen selber liegen in einer Größenordnung von einigen Mikrometern und mehr und können somit problemlos mittels elektronenmikroskopischen Aufnahmen vermessen und zur Charakterisierung des Gefüges der Schleifkörner herangezogen werden. Entsprechende Messungen wurden im Rahmen der vorliegenden Arbeiten durchgeführt, wobei festgestellt wurde, dass sämtliche Referenzbeispiele mit dem mittleren Querschnitt der vermessenen Dendriten unterhalb von 20 $\mu$m liegen, und die bevorzugten Ausführungsformen unterhalb von 15 $\mu$m liegen, und damit ein deutlich feineres Gefüge aufweisen als das Vergleichsbeispiel 1, das ohne den Zusatz von $SiO_2$ geschmolzen wurde. Die Ergebnisse sind in der Tabelle 2 zusammengefasst.

Aus den Schleiftests, die in den Tabellen 3 bis 5 zusammengefasst sind, läßt sich ableiten, dass die Leistungsstärke des Schleifkorns mit feiner werdendem Gefüge zunimmt. Gleichzeitig ist aus der EP-B-0 595 081 bekannt und auch anhand der Schleiftests nachvollziehbar, dass ein hoher Anteil an tetragonaler $ZrO_2$-Phase sich günstig auf die Leistungsstärke auswirkt, wobei sich bei den vorliegenden Beispielen jedoch dieser Einfluss in Grenzen hält, da alle aufgeführten Beispiele bereits relativ hohe Anteile an tetragonaler Phase aufweisen.

Gelöst wird Aufgabe der Erfindung somit auch durch das Herausfinden der optimalen Kombination an Ti-Verbindungen und Si-Verbindungen für die Herstellung eines hochwertigen Zirkonkorund-Schleifkorns.

Der Einfluss der Titanverbindungen auf die Schleifleistung ist von komplexer Art. So wird $TiO_2$ zunächst einmal zur Stabilisierung der tetragonalen $ZrO_2$-Phase eingesetzt. Dabei ist jedoch entscheidend, dass unter reduzierenden Bedingungen gearbeitet wird, da anhand von Versuchen ohne Reduktionsmitteln nachgewiesen werden konnte, dass offensichtlich eine oder mehrere der reduzierten Verbindungen des Titans für die Stabilisierung der tetragonalen $ZrO_2$-Phase verantwortlich ist, was auch aus dem Beispiel 3 in der EP-B-0 595 081 hervorgeht, bei dem u.a. eine Zirkonkorundschmelze mit Titanoxidzusatz ohne den Zusatz eines Reduktionsmittels abgeschreckt wurde. Entsprechende Versuche, die dieses Ergebnis bestätigen, wurden auch im Rahmen der vorliegenden Arbeiten durchgeführt. Welche Titanverbindung letztendlich für die Stabilisierung verantwortlich ist, ist Gegenstand weiterer Untersuchungen, die noch nicht abgeschlossen sind. Ganz offensichtlich haben aber auch die bei der Schmelze unter reduzierenden Bedingungen in Gegenwart von Kohle entstehenden Titanverbindungen, wie z.B. Titancarbide, Titanoxycarbide, Titanoxycarbonitride u.a., einen positiven Einfluss auf die Schleifleistung, was sich möglicherweise durch die hohe Härte dieser Verbindungen erklären läßt. Die extrem schwer löslichen und hochschmelzenden Verbindungen des Titans verändern jedoch daneben die Viskosität der Schmelze und damit auch das Abkühlverhalten der Schmelze. Eine Schmelze mit hoher Viskosität läßt sich z. B. nur noch schlecht in einen schmalen Spalt zwischen Metallplatten eingießen, zusätzlich verschlechtert sich dabei die Benetzung des Metalls mit flüssiger Schmelze, wodurch wiederum der Wärmeübergang und damit das schnelle Abkühlen behindert wird. Der Zusatz von $SiO_2$ verringert die Viskosität der Schmelze, gleichzeitig wird aber auch - möglicherweise durch die Bildung von Titansiliziden - das Gleichgewicht der gebildeten Titanverbindungen verschoben, wovon offensichtlich auch die für die Stabilisierung der tetragonalen $ZrO_2$-Phase verantwortliche Verbindung betroffen ist. Durch eine Erhöhung des Gehalts an $TiO_2$ gelingt es, das Gleichgewicht wieder so weit zu verschieben, dass wieder hohe Anteile an tetragonaler $ZrO_2$-Phase möglich sind, überraschenderweise ohne dass dabei die Viskosität der Schmelze wieder so weit erhöht wird, dass die Abschreckung der Schmelze bzw. das Gefüge des Produktes verschlechtert wird. Bei einer weiteren Erhöhung des $TiO_2$-Anteils gelingt es dann zwar noch höhere Anteile (100 %) an tetragonaler $ZrO_2$-Phase zu stabilisieren, jedoch wird gleichzeitig auch die Viskosität der Schmelze so stark erhöht, dass insgesamt eine Produktverschlechterung aufgrund des gröberen Gefüges, das wiederum auf die erschwerten Abkühlbedingungen zurückzuführen ist, resultiert.

Eine andere und/oder zusätzliche mögliche Erklärung für die überraschend guten Schleifresultate ist die Ausbildung einer Glasphase im Schleifkorn, wodurch die Verschleißfestigkeit des erfindungsgemäßen Schleifkorns heraufgesetzt wird.

Im folgenden wird die vorliegende Erfindung anhand von Beispielen ausführlich erläutert, ohne dass darin eine Einschränkung zu sehen ist. Die Beispiele 1 bis 7 und 10 sind nicht Teil der Erfindung.

Beispiel 1

Eine Mischung aus 335 kg Tonerde (AC34, Fa. Pechiney, Gardanne), 232 kg Baddeleyit-Konzentrat (Fa. Foskor, South Africa), 16 kg Petrolkoks, 16 kg Rutil und 10 kg Zirkonsand, mit der Zusammensetzung 66.6 % $ZrO_2$, 32.5 % $SiO_2$, 0.32 % $Al_2O_3$, 0.1 % $Fe_2O_3$ und 0.14 % $TiO_2$ wurden im elektrischen Lichtbogenofen geschmolzen. Das Ofengefäß hatte einen Durchmesser von ca. 2 m, die Spannung betrug 110 V und die Belastung wurde mit 1500 kWh gewählt. Die Mischung wurde so chargiert, dass nach ca. einer Stunde die gesamte Mischung eingeschmolzen war und dann nach einem Verfahren gemäß EP-B 0 593 977 abgeschreckt werden konnte. Dabei betrug die Ausgangstemperatur für die Kühlplatten ca. 300°C und der Spalt zwischen den Metallplatten hatte eine Breite von 3 bis 5 mm. Vorversuche hatten gezeigt, dass das Material unter diesen Bedingungen bereits 3 Sekunden nach dem Eingießen zwischen den Kühlplatten vollständig erstarrt ist. Etwa 1 Minute nach dem Abgießen erreicht das Plattenpaket eine Vorrichtung zum Entleeren, bei der das erstarrte und abgekühlte Material aus dem Plattenpaket entfernt und gesammelt werden. Zum Zeitpunkt des Entleerens hatte das erstarrte Material noch eine Temperatur von ca. 350 °C. Nach dem vollständigen Abkühlen kann das Material auf die übliche Weise (beispielsweise über Backenbrecher, Walzenbrecher, Walzenmühlen oder ähnliche Zerkleinerungsaggregaten) zerkleinert und anschließend durch entsprechendes Aussieben zur Körnung aufbereitet werden.

Beispiele 2 bis 10

Die Herstellung der Zirkonkorundschleifkörner erfolgte in Analogie zu Beispiel 1. Es wurde jedoch der Zusatz an Zirkonsand und dementsprechend der . Anteil an Baddeleyit-Konzentrat variiert. Zusätzlich wurde der Gehalt an Rutil variiert. Die Tabelle 1 zeigt die für die in den Beispielen 2 bis 10 aufgezeigten unterschiedlichen Ausführungsformen des erfindungsgemäßen Schleifkorns erforderlichen Ausgangsmischungen an Zirkonsand, Baddeleyitkonzentrat und Rutil. Die Menge an Tonerde und Petrolkoks wurde im Vergleich zum Beispiel 1 nicht verändert und wird daher in der folgenden Tabelle nicht gesondert aufgeführt.

Tabelle 1: Ausgangsmischungen für die Beispiele 2 - 10 (ohne $Al_2O_3$ und Petrolkoks, deren Anteile bei allen Ansätzen unverändert blieben)

| Schleifkorn | Zirkonsand | Baddeleyit-Konzentrat | Rutil |
|---|---|---|---|
| Beispiel 2 | 20 kg | 228 kg | 16 kg |
| Beispiel 3 | 40 kg | 228 kg | 16 kg |
| Beispiel 4 | 80 kg | 206 kg | 16 kg |
| Beispiel 5 | 120 kg | 195 kg | 16 kg |
| Beispiel 6 | 40 kg | 228 kg | 22 kg |
| Beispiel 7 | 60 kg | 214 kg | 28 kg |
| Beispiel 8 | 80 kg | 206 kg | 22 kg |
| Beispiel 9 | 80 kg | 206 kg | 28 kg |
| Beispiel 10 | 80 kg | 206 kg | 40 kg |

Zum direkten Vergleich mit dem Stand der Technik wurden die im folgenden aufgeführten Vergleichsbeispiele unter den gleichen Bedingungen wie die Beispiele 1 - 10 gefertigt. Die Vergleichsbeispiele entsprechen damit in der chemischen Zusammensetzung, den physikalischen Eigenschaften und den schleiftechnischen Eigenschaften den zur Zeit auf dem Markt erhältlichen leistungsstärksten Materialien nach dem Stand der Technik.

Vergleichsbeispiel 1

Die Herstellung erfolgte in Analogie zu Beispiel 1. Es wurde jedoch kein Zirkonsand zugegeben. Die Ausgangsmischung enthielt 335 kg Tonerde, 235 kg Baddeleyit-Konzentrat, 16 kg Rutil, und 16 kg Petrolkoks.

Vergleichsbeispiel 2

Die Herstellung erfolgt in Analogie zu Beispiel 2. Es wurde jedoch kein Rutil eingesetzt, sondern die Stabili- sierung der tetragonalen $ZrO_2$-Modifikation wurde durch die Zugabe von 5 kg $Y_2O_3$ erreicht.

In der Tabelle 2 sind die chemischen Analyse der wichtigsten Bestandteile des Schleifkörner der Referenzbeispiele und der Vergleichsbeispiele zusammengefasst. Die Anteile an $Al_2O_3$ und $ZrO_2$ wurden jeweils so gewählt, dass die Mischung möglichst nahe beim Eutektikum für $Al_2O_3$ und $ZrO_2$ lag, so dass für sämtliche Beispiele der Gehalt an $Al_2O_3$ und $ZrO_2$ nahezu identisch war und sich jeweils zwischen ca. 55 und 58 Gew.-% für $Al_2O_3$ bzw. zwischen ca. 39 und 42 % für $ZrO_2$ lag. In diesen engen Grenzen haben mögliche unterschiedliche Anteile der Hauptbestandteile $ZrO_2$ und $Al_2O_3$ keinen erkennbaren Einfluss auf die Produktqualität und werden daher in der Tabelle 2 nicht gesondert aufgeführt. Die Rohstoff-bedingten Verunreinigungen lagen in allen aufgeführten Beispiel unter 0.5 Gew.-% und werden ebenfalls in der Tabelle 2 nicht gesondert aufgeführt.

Daneben sind in der Tabelle 2 die Anteile an tetragonaler $ZrO_2$-Modifikation, bezogen auf den Gesamtgehalt an $ZrO_2$, aufgeführt. Die Anteile an tetragonaler $ZrO_2$-Modifikation berechnen sich nach der Gleichung

$$T \ (\text{Gew.-\%}) \ = \frac{2t \times 100}{2t + m_1 + m_2} \quad ,$$

die auf der Röntgenbeugungsanalyse von Zirkonkorundpulvern (Röntgen-Pulverdiffraktogramm) basiert, wobei t die Intensität des Peak der tetragonalen Modifikation bei einem Beugungswinkel 2Theta = 30.3, $m_1$ die Intensität des Peak der monoklinen Modifikation bei einem Beugungswinkel 2Theta = 28.3 und $m_2$ die Intensität des Peak der monoklinen Modifikation bei einem Beugungswinkel von 2Theta = 31.5 bedeutet. Die Intensität selber wurde über das Integral der Peakfläche bestimmt.

Tabelle 2: Charakterisierung der diversen Referenzbeispiele und Vergleichsbeispiele

| Schleifkorn | chem. Analyse | Anteile an tetragonaler $ZrO_2$-Modifikation | Gefüge (mittl. Querschnitt der dendritischen eutekti-Domänen)[1)] |
|---|---|---|---|
| Beispiel 1 | $TiO_2$ = 2.45 %<br>$SiO_2$ = 0.08 % | 87 % | 12 $\mu$m |
| Beispiel 2 | $TiO_2$ = 2.52 %<br>$SiO_2$ = 0.21 % | 84 % | 10 $\mu$m |
| Beispiel 3 | $TiO_2$ = 2.50 %<br>$SiO_2$ = 0.32 % | 82 % | 11 $\mu$m |
| Beispiel 4 | $TiO_2$ = 2.46 %<br>$SiO_2$ = 0.45 % | 78 % | 9 $\mu$m |
| Beispiel 5 | $TiO_2$ = 2.56 %<br>$SiO_2$ = 0.78 % | 72 % | 9 $\mu$m |
| Beispiel 6 | $TiO_2$ = 3.25 %<br>$SiO_2$ = 0.29 % | 91 % | 17 $\mu$m |
| Beispiel 7 | $TiO_2$ = 4.26 %<br>$SiO_2$ = 0.32 % | 94 % | 19 $\mu$m |
| Beispiel 8 | $TiO_2$ = 3.36 %<br>$SiO_2$ = 0.48 % | 89 % | 12 $\mu$m |
| Beispiel 9 | $TiO_2$ = 4.26 %<br>$SiO_2$ = 0.49 % | 95 % | 12 $\mu$m |
| Beispiel 10 | $TiO_2$ = 6,31 %<br>$SiO_2$ = 0.48 % | 100 % | 18 $\mu$m |
| Vergleichsbeispiel 1* | $TiO_2$ = 2.48 %<br>$SiO_2$ = 0.02 % | 93 % | 24 $\mu$m |
| Vergleichsbeispiel 2** | $TiO_2$ = 0.08 %<br>$Y_2O_3$ = 0.85 % | 92 % | 12 $\mu$m |

Tabelle fortgesetzt

| Schleifkorn | chem. Analyse | Anteile an tetragonaler ZrO$_2$-Modifikation | Gefüge (mittl. Querschnitt der dendritischen eutekti-Domänen)[1] |
|---|---|---|---|
| | SiO$_2$ = 0.24 % | | |

\* Das Vergleichsbeispiel 1 entspricht einem kommerziell erhältlichen Zirkonkorund nach dem Stand der Technik gemäß der EP 0 595 081 B1

\*\* Das Vergleichsbeispiel 2 entspricht einem kommerziell erhältlichen Zirkonkorund nach dem Stand der Technik gemäß der US 4 457 767.

1) Bestimmt wurde der mittlere Querschnitt der Dendriten durch Vermessen von Rückstreuelektronenbildern in 500-facher Vergrößerung von Zirkonkorundplättchen mit einem mittleren Querschnitt von 3 mm, die längs zur Wachstumsrichtung der Dendriten angeschliffen wurden. Die Zirkonkorundplättchen selber wurden durch das Eingießen der flüssigen Schmelze in einen Spalt zwischen Metallplatten mit einer mittleren Spaltbreite von 3 mm erhalten, wobei das Wachstum der Dendriten von der Kühlplatte senkrecht in das Innere des abgegossenen und erstarrten Zirkonkorundplättchens verläuft.

Mit der in der Tabelle 2 aufgeführten Schleifkörnern wurden Schleiftests durchgeführt, die im folgenden näher erläutert werden und in den Tabellen 3 bis 5 zusammengefasst sind.

Schleiftest 1

Tabelle 3: Testergebnisse Bandschleifen gegen die Werkstücke ST 37 (Schleifzeit 12 min) und V2A (Schleifzeit 30 min) jeweils mit der Körnung P40 nach FEPA

| Schleifkorn | Stahlrohr (ST37) | Abtragsleistung V2A -Fläche |
|---|---|---|
| Beispiel 1 | 541 g = 115 % | 375 g = 108 % |
| Beispiel 2 | 621 g = 132 % | 396 g = 114 % |
| Beispiel 3 | 668 g = 142 % | 424 g = 122 % |
| Beispiel 4 | 603 g = 134 % | 379 g = 109 % |
| Beispiel 5 | 499 g = 106 % | 361 g = 104 % |
| Beispiel 6 | 582 g = 124 % | 400 g = 115 % |
| Beispiel 7 | 555 g = 118 % | 403 g = 116 % |
| Beispiel 8 | 658 g = 140 % | 449 g = 129 % |
| Beispiel 9 | 677 g = 144 % | 459 g = 132 % |
| Beispiel 10 | 503 g = 107 % | 393 g = 113 % |
| Vergleichsbeispiel 1 | 470 g = 100 % | 348 g = 100 % |
| Vergleichsbeispiel 2 | 461 g = 98 % | 361 g = 104 % |

Schleiftest 2

Tabelle 4: Testergebnisse Bandschleifen C45 und V2A (jeweils Vollmaterial, Durchmesser 30 mm) / Anpressdruck 35 N / Schleifzeit 50 Minuten

| Schleifkorn | Körnung | Abtragsleistung: C45 | V2A |
|---|---|---|---|
| Beispiel 1 | P36 | 2953 g = 105 % | 890 g = 112 % |
| | P50 | 2269 g = 114 % | 712 g = 109 % |
| Beispiel 2 | P36 | 3571 g = 127 % | 930 g = 117 % |
| | P50 | 2428 g = 122 % | 888 g = 136 % |

Tabelle fortgesetzt

| Schleifkorn | | Körnung | Abtragsleistung: | |
|---|---|---|---|---|
| | | | C45 | V2A |
| Beispiel 3 | | P36 | 3684 g = 131 % | 1097 g = 138 % |
| | | P50 | 2527 g = 127 % | 966 g = 148 % |
| Beispiel 4 | | P36 | 3599 g = 128 % | 1065 g = 134 % |
| | | P50 | 2607 g = 131 % | 803 g = 123 % |
| Beispiel 5 | | P36 | 2896 g = 103 % | 779 g = 98 % |
| | | P50 | 2109 g = 106 % | 660 g = 101 % |
| Beispiel 6 | | P36 | 3627 g = 129 % | 970 g = 122 % |
| | | P50 | 2666 g = 134 % | 728 g = 115 % |
| Beispiel 7 | | P36 | 3065 g = 109 % | 890 g = 112 % |
| | | P50 | 2267 g = 114 % | 718 g = 110 % |
| Beispiel 8 | | P36 | 4077 g = 145 % | 1097 g = 138 % |
| | | P50 | 2706 g = 136 % | 914 g = 140 % |
| Beispiel 9 | | P36 | 3965 g = 141 % | 1167 g = 147 % |
| | | P50 | 2647 g = 133 % | 993 g = 152 % |
| Beispiel 10 | | P36 | 2868 g = 102 % | 898 g = 113 % |
| | | P50 | 2249 g = 113 % | 764 g = 117 % |
| Vergleichsbeispiel 1 | | P36 | 2812 g = 100 % | 795 g = 100 % |
| | | P50 | 1990 g = 100 % | 653 g = 100 % |
| Vergleichsbeispiel 2 | | P36 | 2792 g = 99 % | 783 g = 98 % |
| | | P50 | 1908 g = 96 % | 705 g = 108 % |

Schleiftest 3

Tabelle 5: Testergebnisse Bandschleifen SUS 304 (Schleifzeit 5 min.) und S 50 C (Schleifzeit: 30 min) / Körnung P40 nach FEPA

| Schleifkorn | Abtragsleistung: | |
|---|---|---|
| | Rostfrei Stahl SUS 304 hohe Belastung | Baustahl S 50 C mittlere Belastung |
| Beispiel 1 | 541 g = 123 % | 2120 g = 107 % |
| Beispiel 2 | 621 g = 127 % | 2080 g = 105 % |
| Beispiel 3 | 542 g = 138 % | 2311 g = 116 % |
| Beispiel 4 | 603 g = 135 % | 2267 g = 114 % |
| Beispiel 5 | 415 g = 104 % | 1941 g = 98 % |
| Beispiel 6 | 495 g = 124 % | 2219 g = 112 % |
| Beispiel 7 | 555 g = 108 % | 2020 g = 102 % |
| Beispiel 8 | 547 g = 137 % | 2536 g = 128 % |

Tabelle fortgesetzt

| Schleifkorn | Abtragsleistung: | |
| | Rostfrei Stahl SUS 304 hohe Belastung | Baustahl S 50 C mittlere Belastung |
| --- | --- | --- |
| Beispiel 9 | 567 g = 142 % | 2833 g = 143 % |
| Beispiel 10 | 431 g = 108 % | 2199 g = 111 % |
| Vergleichsbeispiel 1 | 399 g = 100 % | 1981 g = 100 % |
| Vergleichsbeispiel 2 | 423 g = 106 % | 2056 g = 104 % |

Wie aus den Beispielen zu erkennen ist, werden mit Schleifmitteln, die mit diesem Schleifkorn hergestellt werden, bei der Bearbeitung einer breiten Palette von Werkstoffen unter Beibehaltung vergleichbarer bzw. gleicher Versuchsparameter Steigerungen der Abtragsleistungen bis ca. 50 % und mehr im Vergleich mit den bisher bekannten Schleifmitteln auf Basis von Zirkonkorund erzielt. Dies gilt insbesondere für flexible Zirkonkorundschleifmittel, wie zum Beispiel Schleifbänder und Schleifpapiere, die im wesentlichen für die vorher genannten Tests herangezogen wurden.

Darin ist jedoch keine Einschränkung der Erfindung zu sehen. Zusätzliche Versuche mit weiteren Werkstoffen und Schleifmitteltypen haben gezeigt, dass das erfindungsgemäße Schleifkorn auch für andere Anwendungsbereiche Vorteile bringt, die somit ebenfalls im Sinne der Erfindung durch die nachfolgend angeführten Ansprüche erfasst werden sollen.

## Patentansprüche

1. Schleifkorn auf Basis von $Al_2O_3$ und $ZrO_2$ mit einem Gehalt an Titanverbindungen in einer reduzierten Form, insbesondere in Form von Oxiden und/oder Suboxiden und/oder Carbiden und/oder Oxycarbiden und/oder Oxycarbonitriden und/oder Siliziden, zwischen 2 und 5 Gew.-%, ausgedrückt als $TiO_2$, einem Gehalt an $ZrO_2$ zwischen 35 und 45 Gew.-%, wobei mindestens 85 Gew.-% des $ZrO_2$ in der tetragonalen Kristallform vorliegen, einem Gesamtkohlenstoff-Gehalt zwischen 0.03 und 0.5 Gew.-%, einem Anteil an Rohstoff-bedingten Verunreinigungen von weniger als 3.0 Gew.-%, wobei der Gehalt an Seltenen Erden, gerechnet als Oxide, weniger als 0.1 Gew.-% beträgt, einen Gehalt an Si-Verbindungen zwischen 0.2 und 0.7 Gew. -%, ausgedrückt als $SiO_2$, und einem Gehalt an $Al_2O_3$ zwischen 55 und 65 Gew.-%, dadurch erhältlich, dass eine für eine entsprechende Zusammensetzung des Schleifkorns erforderliche Mischung aus $Al_2O_3$, $ZrO_2$, $TiO_2$ und $SiO_2$ und/oder diese enthaltende Rohstoffe in Gegenwart eines Überschusses eines Reduktionsmittel geschmolzen und so abgeschreckt wird, dass die Schmelze in weniger als 5 Sekunden vollständig erstarrt, wobei das Schleifkorn ein extrem feines Gefüge mit dendritischen eutektischen Domänen aus $Al_2O_3$ und $ZrO_2$ mit einem mittleren Querschnitt von weniger als 15 $\mu$m aufweist.

2. Schleifkorn gemäß Anspruch 1,
   **dadurch gekennzeichnet, dass** der Anteil an tetragonaler $ZrO_2$ - Modifikation mindestens 90 Gew.-% beträgt.

3. Schleifkorn gemäß einem oder mehreren der Ansprüche 1 bis 2,
   **dadurch gekennzeichnet, dass** der Anteil an Rohstoff-bedingten Verunreinigungen unter 1 Gew.-% liegt.

4. Verfahren zur Herstellung eines Schleifkorns gemäß einem oder mehreren der Ansprüche 1 bis 3,
   **dadurch gekennzeichnet, dass**

   a) eine entsprechende Mischung der Rohstoffe in Gegenwart von Reduktionsmitteln geschmolzen wird,
   b) die flüssige Schmelze abgegossen und abgeschreckt wird und in weniger als 5 Sekunden erstarrt, und
   c) das erstarrte Material nach dem Abkühlen zerkleinert und zur Schleifkörnung aufbereitet wird.

5. Verfahren gemäß Anspruch 4,
   **dadurch gekennzeichnet, dass** die flüssige Schmelze so abgeschreckt wird, dass sie in weniger als 5 Sekunden, bevorzugt in weniger als 3 Sekunden, vollständig erstarrt.

6. Verfahren gemäß einem oder mehreren der Ansprüche 4 und 5,
   **dadurch gekennzeichnet, dass** als Rohstoff für $Al_2O_3$ Tonerde eingesetzt wird.

7. Verfahren gemäß einem oder mehreren der Ansprüche 4 bis 6,

**dadurch gekennzeichnet, dass** als Rohstoff für $ZrO_2$ Baddeleyit, Zirkonsand und /oder künstliche Zirkonkonzentrate eingesetzt werden.

8. Verfahren gemäß einem oder mehreren der Ansprüche 4 bis 7,
**dadurch gekennzeichnet, dass** als Rohstoff für $TiO_2$ Rutil eingesetzt wird.

9. Verfahren gemäß einem oder mehreren der Ansprüche 4 bis 8,
**dadurch gekennzeichnet, dass** als Rohstoff für $SiO_2$ Quarz, Mullit und/oder Zirkonsand eingesetzt wird.

10. Verfahren gemäß einem oder mehreren der Ansprüche 4 bis 9,
**dadurch gekennzeichnet, dass** als Rohstoff für $SiO_2$ ein $SiO_2$ - haltiger Rohstoff eingesetzt wird, der neben $SiO_2$ eine oder mehrere Sauerstoffverbindungen der Elemente aus der Gruppe Al, Ti und Zr enthält.

11. Verfahren gemäß einem oder mehreren der Ansprüche 4 bis 10,
**dadurch gekennzeichnet, dass** als Reduktionsmittel Kohle in Form von Petrolkoks und/oder Graphit und/oder Anthrazit eingesetzt wird.

12. Verwendung des Schleifkorns gemäß einem oder mehreren der Ansprüche 1 bis 3 in flexiblen und gebundenen Schleifmitteln.

**Claims**

1. An abrasive grain based on $Al_2O_3$ and $ZrO_2$ comprising a content of titanium compounds in a reduced form, in particular in the form of oxides and/or suboxides and/or carbides and/or oxycarbides and/or oxycarbonitrides and/or silicides, of between 2 and 5 % by weight, expressed as $TiO_2$,
a content of $ZrO_2$ of between 35 and 45 % by weight, where at least 85 % by weight of the $ZrO_2$ are present in the tetragonal crystal form,
a total carbon content of between 0.03 and 0.5 % by weight, a percentage of impurities contained in the raw materials of less than 3.0 % by weight,
wherein the content of rare earths, regarded as oxides, is less than 0.1 % by weight, a content of Si compounds of between 0.2 and 0.7 % by weight, expressed as $SiO_2$, and a content of $Al_2O_3$ of between 55 and 65 % by weight, obtainable by the fact that a mixture of $Al_2O_3$, $ZrO_2$, $TiO_2$ and $SiO_2$ required for an appropriate composition of the abrasive grain and/or raw materials containing them is melted and quenched in the presence of a surplus of a reduction agent so that the melt completely solidifies in less than 5 seconds, with the abrasive grain comprising an extremely fine structure with dendritic eutectic domains of $Al_2O_3$ and $ZrO_2$ with an average cross section of less than 15 $\mu$m.

2. An abrasive grain according to Claim 1,
**characterised in that** the percentage of tetragonal $ZrO_2$ modification is at least 90 % by weight.

3. An abrasive grain according to one or more of Claims 1 to 2,
**characterised in that** the percentage of impurities contained in the raw materials lies beneath 1 % by weight.

4. A method for the manufacture of an abrasive grain according to one or more of Claims 1 to 3,
**characterised in that**

a) a corresponding mixture of the raw materials is melted in the presence of reduction agents,
b) the liquid melt is poured and quenched and solidifies in less than 5 seconds, and
c) the solidified material is comminuted after cooling and processed to the abrasive granulation.

5. A method according to Claim 4,
**characterised in that** the liquid melt is quenched so that it completely solidifies in less than 5 seconds, preferably in less than 3 seconds.

6. A method according to one or more of Claims 4 and 5,
**characterised in that** aluminium oxide is used as the raw material for $Al_2O_3$.

**7.** A method according to one or more of Claims 4 to 6,
**characterised in that** baddeleyite, zircon sand, and/or synthetic zircon concentrates are used as the raw material for $ZrO_2$.

**8.** A method according to one or more of Claims 4 to 7,
**characterised in that** rutile is used as the raw material for $TiO_2$.

**9.** A method according to one or more of Claims 4 to 8,
**characterised in that** quartz, mullite and/or zircon sand is used as the raw material for $SiO_2$.

**10.** A method according to one or more of Claims 4 to 9,
**characterised in that** a raw material containing $SiO_2$, which apart from $SiO_2$ contains one or more oxygen compounds of the elements from the group comprising Al, Ti and Zr, is used as the raw material for $SiO_2$.

**11.** A method according to one or more of Claims 4 to 10,
**characterised in that** carbon in the form of petroleum coke and/or graphite and/or anthracite is used as the reduction agent.

**12.** Use of the abrasive grain according to one or more of Claims 1 to 3 in flexible and bound abrasives.

**Revendications**

**1.** Grain abrasif à base de $Al_2O_3$ et de $ZrO_2$ avec une teneur en composés de titane sous une forme réduite, en particulier sous forme d'oxydes et/ou de sous oxydes et/ou de carbures et/ou d'oxycarbures et/ou d'oxycarbonitures et/ou de siliciures, entre 2 et 5 % en poids, exprimée en $TiO_2$, une teneur en $ZrO_2$ entre 35 et 45 % en poids, dont au moins 85 % en poids du $ZrO_2$ se présentent sous forme de cristaux tétragonaux, une teneur totale en carbone entre 0,03 et 0,5 % en poids, une proportion d'impuretés dues à la matière première inférieure à 3,0 % en poids, la teneur en terres rares, calculées en tant qu'oxydes, étant inférieure à 0,1 % en poids, une teneur en composés de Si entre 0,2 et 0,7 % en poids, exprimée en $SiO_2$, et une teneur en $Al_2O_3$ entre 55 et 65 % en poids, pouvant être obtenu du fait qu'un mélange de $Al_2O_3$, $ZrO_2$, $TiO_2$, et $SiO_2$, nécessaire à une composition adéquate du grain abrasif, et/ou des matières premières contenant ceux-ci est fondu en présence d'un excédent d'agent réducteur et refroidi brusquement, de façon que la masse fondue est totalement solidifiée en moins de 5 secondes, le grain abrasif présentant une structure extrêmement fine avec des domaines eutectiques dendritiques composés de $Al_2O_3$ et $ZrO_2$ ayant une section transversale moyenne inférieure à 15 $\mu$m.

**2.** Grain abrasif selon la revendication 1,
**caractérisé en ce que**
la proportion de $ZrO_2$ tétragonal est d'au moins 90 % en poids.

**3.** Grain abrasif selon une ou plusieurs des revendications 1 à 2,
**caractérisé en ce que**
la proportion d'impuretés dues à la matière première est inférieure à 1 % en poids.

**4.** Procédé de production d'un grain abrasif selon une ou plusieurs des revendications 1 à 3,
**caractérisé en ce que**

a) un mélange adéquat des matières premières est fondu en présence d'agents réducteurs,
b) une masse fondue liquide est coulée et refroidie brusquement et solidifiée en moins de 5 secondes, et
c) le produit solidifié est broyé après le refroidissement et traité pour la granularité abrasive.

**5.** Procédé selon la revendication 4,
**caractérisé en ce que**
la masse fondue liquide est refroidie brusquement de sorte qu'elle est totalement solidifiée en moins de 5 secondes, de préférence en moins de 3 secondes.

**6.** Procédé selon une ou plusieurs des revendications 4 et 5,
**caractérisé en ce que**

de l'alumine est utilisée comme matière première pour $Al_2O_3$.

7. Procédé selon une ou plusieurs des revendications 4 à 6,
   **caractérisé en ce que**
   de la baddeleyite, du sable de zircon et/ou des concentrés artificiels de zircon sont utilisés comme matière première pour $ZrO_2$.

8. Procédé selon une ou plusieurs des revendications 4 à 7,
   **caractérisé en ce que**
   du rutile est utilisé comme matière première pour $TiO_2$.

9. Procédé selon une ou plusieurs des revendications 4 à 8,
   **caractérisé en ce que**
   du quartz, de la mullite et/ou du sable de zircon sont utilisés comme matière première pour $SiO_2$.

10. Procédé selon une ou plusieurs des revendications 4 à 9,
    **caractérisé en ce qu'**
    une matière première contenant du $SiO_2$, qui contient en plus du $SiO_2$ un ou plusieurs composés oxygénés des éléments du groupe Al, Ti et Zr, est utilisée comme matière première pour $SiO_2$.

11. Procédé selon une ou plusieurs des revendications 4 à 10,
    **caractérisé en ce que**
    du charbon sous forme de coke de pétrole et/ou de graphite et/ou d'anthracite est utilisé comme agent réducteur.

12. Utilisation du grain abrasif selon une ou plusieurs des revendications 1 à 3, dans des produits abrasifs flexibles et agglomérés.